(19) **Europäisches Patentamt**

**European Patent Office**

**Office européen des brevets**

(11) **EP 1 055 692 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(51) Int Cl.⁷: **C08G 18/08**, C08G 18/66

(21) Anmeldenummer: **00110187.2**

(22) Anmeldetag: **15.05.2000**

(54) **Verfahren zur kontinuierlichen Herstellung von thermoplastisch verarbeitbaren Polyurethanen**

Method for the continuous preparation of thermoplastically processible polyurethanes

Méthode de fabrication en continu de polyuréthanes façonnables sous forme thermoplastique

(84) Benannte Vertragsstaaten:
**AT BE CH CY DE DK ES FI FR GB GR IE IT LI LU MC NL PT SE**

(30) Priorität: **26.05.1999 DE 19924090**

(43) Veröffentlichungstag der Anmeldung:
**29.11.2000 Patentblatt 2000/48**

(73) Patentinhaber: **Bayer MaterialScience AG**
**51368 Leverkusen (DE)**

(72) Erfinder:
• **Bräuer, Wolfgang, Dr.**
**51375 Leverkusen (DE)**
• **Kaufhold, Wolfgang, Dr.**
**51061 Köln (DE)**
• **Müller, Friedemann, Dr.**
**41470 Neuss (DE)**
• **Winkler, Jürgen**
**40764 Langenfeld (DE)**
• **Heidingsfeld, Herbert**
**50226 Frechen (DE)**
• **Röhrig, Wolfgang**
**51467 Bergisch Gladbach (DE)**
• **Hoppe, Hans-Georg**
**42799 Leichlingen (DE)**

(56) Entgegenhaltungen:
**EP-A- 0 747 409 EP-A- 0 900 812**

**Beschreibung**

Die Erfindung betrifft ein Verfahren zur kontinuierlichen Herstellung von thermoplastisch verarbeitbaren Polyurethanen (mit verbessertem Erweichungsverhalten) in einem Rohrmischer.

Thermoplastische Polyurethanelastomere sind seit langem bekannt. Sie sind aufgrund der Kombination hochwertiger mechanischer Eigenschaften mit den bekannten Vorteilen der kostengünstigen thermoplastischen Verarbeitbarkeit von technischer Bedeutung. Durch die Verwendung unterschiedlicher chemischer Aufbaukomponenten läßt sich eine große Variationsbreite mechanischer Eigenschaften erzielen. Eine Übersicht über TPUs, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPUs werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 70 Shore A bis 75 Shore D.

Der Aufbau der thermoplastisch verarbeitbaren Polyurethanelastomere kann entweder schrittweise (Prepolymerdosierverfahren) oder durch die gleichzeitige Reaktion aller Komponenten in einer Stufe (one-shot-Dosierverfahren) erfolgen.

Die TPUs können kontinuierlich oder diskontinuierlich hergestellt werden. Die bekanntesten technischen Herstellverfahren sind das Bandverfahren (GB-A 1,057,018) und das Extruderverfahren (DE-A 19 64 834, DE-A 23 02 564 und DE-A 20 59 570). Beim Extruderverfahren werden die Ausgangsstoffe in einen Schneckenreaktor dosiert, dort polyaddiert und in eine gleichmäßige Granulatform überführt. Das Extruderverfahren ist vergleichsweise einfach, hat aber den Nachteil, daß die Homogenität der so hergestellten Produkte aufgrund des gleichzeitigen Ablaufs von Mischen und Reagieren für viele Anwendungen nicht ausreichend ist. Zusätzlich ist das Erweichungsverhalten der TPUs und das der daraus hergestellten Formkörper beschränkt. Leicht aufschmelzende TPUs, wie sie z.B. für Schmelzfolien oder Sinterprodukte eingesetzt werden, lassen sich nach diesem Verfahren nicht oder nur eingeschränkt herstellen.

Aus dem Stand der Technik sind ferner Herstellungsverfahren bekannt, bei denen die Ausgangsstoffe zunächst in einer Mischzone bei Temperaturen, bei denen keine Polyaddition eintritt, gemischt werden und anschließend in einer Reaktionszone, die die gewünschte Reaktionstemperatur aufweist, miteinander reagieren. Die Misch- und Reaktionszone werden vorzugsweise als Statikmischer ausgebildet.

Gemäß DE-A 28 23 762 werden nach dem one-shot-Verfahren homogene Produkte erhalten. Gemäß EP-A 747 409 dosiert man nach dem Prepolymerverfahren und erhält homogene TPUs mit verbesserten mechanischen Eigenschaften.

Aufgabe war es daher, ein einfaches Verfahren zur Verfügung zu stellen, mit dem es möglich ist, homogene TPUs mit verbessertem Erweichungsverhalten kostengünstig und technisch einfach herzustellen.

Diese Aufgabe konnte überraschend dadurch gelöst werden, daß TPUs kontinuierlich in einem gerührten Rohrreaktor (Rohrmischer), in dem im "One-shot-Dosierverfahren" die gesamte TPU-Reaktion im wesentlichen durchgeführt wird, unter speziellen Verfahrensbedingungen hergestellt werden. Mit diesem Verfahren werden homogene und deutlich besser aufschmelzbare TPU-Produkte erhalten.

Gegenstand der Erfindung ist ein One-shot-Dosierverfahren zur kontinuierlichen Herstellung von thermoplastisch verarbeitbaren homogenen Polyurethanen mit verbessertem Erweichungsverhalten, bei dem

ein oder mehrere Diisocyanate (A) und

eine zerewitinoffaktive Wasserstoffatome aufweisende Mischung (B) aus

B1) 1 bis 85 Äquivalent-%, bezogen auf die Isocyanatgruppen in (A), einer oder mehrerer Verbindungen mit im Mittel mindestens 1,8 und höchstens 2,2 zerewitinoffaktiven Wasserstoffatomen pro Molekül und einem mittleren Molekulargewicht $\overline{M}_n$ von 450 g/Mol bis 5 000 g/Mol,

B2) 15 bis 99 Äquivalent-%, bezogen auf die Isocyanatgruppen in (A), einer oder mehrerer Kettenverlängerungsmittel mit im Mittel mindestens 1,8 und höchstens 2,2 zerewitinoffaktiven Wasserstoffatomen pro Molekül und einem Molekulargewicht von 60 g/Mol bis 400 g/Mol, sowie

0 bis 20 Gew.-%, bezogen auf die Gesamtmenge an TPU, weiterer Hilfs- und Zusatzstoffe (C),

wobei die Komponenten (A) und (B) in einem NCO:OH-Verhältnis von 0,9:1 bis 1,1:1 eingesetzt werden,

in einem nicht zwangsfördernd gerührten Rohrreaktor im wesentlichen zum vollständigen Umsatz gebracht werden , dadurch gekennzeichnet , daß das Verhältnis aus Umfangsgeschwindigkeit des Rührers (m/sec) im Rohrreaktor und Durchsatz (g/sec) den Wert von 0,03 (m/g) überschreitet.

Als organische Diisocyanate (A) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4- und -2,6-cyclohexandiisocyanat sowie die entsprechenden Isomerengemische, 4,4'-, 2,4'- und 2,2'-Dicyclohexylinethan-diisocyanat sowie die entsprechenden Isomerengemische und aromatische Diisocyanate, wie 2,4-Toluylendiisocyanat, Gemische aus 2,4- und 2,6-Toluylendiisocyanat, 4,4'-Diphenylmethandiisocyanat, 2,4'- Diphenylmethandiisocyanat und 2,2'-Diphenylmethandiisocyanat, Gemische aus 2,4'- Diphenylmethandiisocyanat und 4,4'-Diphenylmehandiisocyanat, urethanmodifizierte flüssige 4,4'-Diphenylmethandiisocyanate und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf Gesamt-Diisocyanat), aber höchstens soviel eines Polyisocyanates, daß ein thermoplastisch verarbeitbares Produkt entsteht, verwendet werden. Beispiele sind Triphenylmethan-4,4',4"-triisocyanat und Polyphenyl-polymethylen-polyisocyanate.

Als Komponente B1) werden vorzugsweise lineare, hydroxylterminierte Polyole mit im Mittel 1,8 bis 3,0, bevorzugt bis 2,2 zerewitinoff-aktiven Wasserstoffatomen pro Molekül und mit einem mittleren Molekulargewicht von 450 bis 5 000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether eingesetzt werden, jedoch höchstens in solcher Menge, daß ein thermoplastisch verarbeitbares Produkt entsteht . Die im wesentlichen linearen Polyether-Diole haben vorzugsweise Molekulargewichte von 450 bis 5 000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol und/oder 1,6-Hexandiol, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiolpolyadipate und Poly-caprolactone. Die Polyester-Diole besitzen mittlere Molekulargewichte von 450 bis 5 000 und können einzeln oder in Form von Mischungen untereinander zur Anwendung kommen.

Als Komponente B2) werden bevorzugt Diole oder Diamine mit im Mittel 1,8 bis 3,0, bevorzugt bis 2,2 zerewitinoff-aktiven Wasserstoffatomen pro Molekül und einem mittleren Molekulargewicht von 60 bis 400 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon, ethoxylierte Bisphenole, wie z.B. 1,4-Di(β-hydroxyethyl)-bisphenol A, (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und/oder 3,5-Diethyl-2,6-toluylen-diamin und primäre mono-, di-, tri- und/oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, eingesetzt werden. Beispielhaft genannt seien Alkohole wie Oktanol und Stearylalkohol oder Amine wie Butylamin und Stearylamin.

Zur Herstellung der TPUs können die Aufbaukomponenten, gegebenenfalls in Gegenwart von Katalysatoren, Hilfsmitteln und/oder Zusatzstoffen vorzugsweise in solchen Mengen zur Reaktion gebracht werden, daß das Äquivalenzverhältnis von NCO-Gruppen A) zur Summe der NCO-reaktiven Gruppen, insbesondere der OH-Gruppen der niedermolekularen Diole/Triole B2) und Polyole B1) 0,9:1,0 bis 1,1:1,0, vorzugsweise 0,95:1,0 bis 1,10:1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat. Bevorzugte Katalysatoren sind organische Metallverbindungen, insbesondere Titansäureester, Eisen- und/oder Zinnverbindungen.

Neben den TPU-Komponenten und den Katalysatoren können auch Hilfsmittel und/oder Zusatzstoffe C) bis zu 20 Gew.-% , bezogen auf die Gesamtmenge TPU, zugesetzt werden. Sie können in einer der TPU-Komponenten, vorzugsweise in der Komponente B1), vorgelöst werden oder auch ggf. nach erfolgter Reaktion in einem dem gerührten Rohrreaktor nachgeschalteten Mischaggragat, wie z.B. einem Extruder, zudosiert werden. Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Ebenfalls können andere Elastomere wie Kautschuk, Ethylen/Vinylacetatcopolymere, Styrol/Butadiencopolymere sowie andere TPUs verwendet werden. Weiterhin zur Einarbeitung geeignet sind handelsübliche Weichmacher wie Phosphate, Phthalate, Adipate, Sebacate und Alkylsulfonsäureester.

Das erfindungsgemäße Herstellverfahren wird vorzugsweise wie folgt ausgeführt:

Die Komponenten A) und B) werden getrennt voneinander, vorzugsweise in einem Wärmetauscher, auf eine Temperatur zwischen 50° und 220°C erwärmt und in flüssiger Form gleichzeitig kontinuierlich in ein nicht zwangsfördernd gerührtes Rohr (Rohrmischer) mit einem Länge/Durchmesser-Verhältnis von 1:1 bis 50:1, bevorzugt 2:1 bis 20:1, dosiert.

Der Rührer mischt die Komponenten mit einer Drehzahl von bevorzugt 200 bis 5 000 U/min. Die Drehzahl des Rührers wird erfindungsgemäß so eingestellt, daß das Verhältnis aus Umfangsgeschwindigkeit des Rührerdurchmessers in m/sec und Durchsatz (Summe der Komponentendosierungen A) + B) und fakultativ C) in g/sec den Wert 0,03 m/g überschreitet. Bevorzugt wird ein Wert von größer 0,06 m/g.

Der Rührer ist ein nicht zwangsfördernder, bevorzugt einachsig rotierender mechanischer Rührer. Es können z.B. Balken, Stäbe, Anker, Gitter, Flügel oder Propeller als Mischelemente verwendet werden.

In dem gerührten Rohrreaktor (Rohrmischer) wird erfindungsgemäß die TPU-Auf baureaktion im wesentlichen zum vollständigen Umsatz, d.h. >90 %, bezogen auf die Einsatzkomponente A), gebracht. Die dazu benötigte Verweilzeit beträgt in Abhängigkeit des Durchsatzes, der eingesetzten Rohstoffe, der Reaktionstemperaturen und des Katalysators 2 sec bis 5 min. Aus wirtschaftlichen Gründen werden die genannten Bedingungen bevorzugt auf eine Verweilzeit im Rohrmischer von 5 bis 60 sec eingestellt.

Die Reaktionstemperaturen erreichen dabei je nach Start-Temperatur der Ausgangskomponenten Werte von 140° bis 300°C, bevorzugt oberhalb 220°C.

Die Reaktionsmischung wird aus dem Rohrmischer kontinuierlich ausgetragen. Sie kann direkt auf einen Träger abgelegt werden. Nach Temperung bei Temperaturen von 60 bis 180°C und anschließender Abkühlung kann die TPU-Masse granuliert werden. In einem kontinuierlichen Herstell-Prozeß ist der Träger ein kontinuierlich transportierendes Förder-Band.

In einer besonderen erfindungsgemäßen Variante wird die Rohrmischer-Reaktionsmischung direkt in einen kontinuierlich arbeitenden Kneter und/oder Extruder (z.B. einen Zweiwellenkneter ZSK) dosiert, wo man bei Temperaturen von 120 bis 250°C zusätzliche Hilfsstoffe in das TPU einmischen kann. Am Ende des Extruders wird ebenfalls granuliert.

Das nach dem erfindungsgemäßen Verfahren hergestellte TPU kann zu Spritzgießartikeln, Extrusionsartikeln, insbesondere zu Schmelz-Folien, zu Beschichtungsmassen bzw. Sintertypen und zu leicht schmelzenden Coextrusionstypen, wie z.B. Kaschierungen, Kalandrierungen u. Powder-slush-Typen verarbeitet werden. Bei guter Homogenität zeichnet es sich, wie auch die daraus hergestellten Formkörper, vor allem durch eine niedrige Erweichungstemperatur aus.

Die Erfindung soll anhand der nachfolgenden Beispiele näher erläutert werden.

**Beispiele**

**Beispiele 1 bis 5**

TPU-Rezeptur für die Beispiele 1 bis 5:

| | |
|---|---|
| Poly-butandiol-1,4-adipat (Molekulargewicht ca. 820) | 54 Gew.-Teile |
| Butandiol-1,4 | 7,4 Gew.-Teile |
| 4,4'-Diphenylmethandiisocyanat | 37 Gew.-Teile |
| Ethylen-bis-stearylamid | 0,2 Gew.-Teile |
| Zinndioctoat | 200 ppm |

**Beispiel 1** (nicht erfindungsgemäßes ZSK-Verfahren (Vergleichsbeispiel)) :

Der Polyester, in dem 200 ppm (bezogen auf Polyester) Zinndioctoat als Katalysator gelöst waren, wurde mit dem Butandiol auf 145°C erhitzt und kontinuierlich in das erste Gehäuse einer ZSK 83 (Firma Werner/Pfleiderer) dosiert. In das gleiche Gehäuse wurden 4,4-Diphenylmethandiisocyanat (130°C) und Ethylen-bis-stearylamid dosiert. Die ersten 9 Gehäuse der ZSK waren nicht beheizt (quasi-adiabatisch). Durch die freiwerdende Reaktionswärme erreichte man Temperaturen bis zu 240°C. Die letzten 4 Gehäuse wurden gekühlt. Die Drehzahl der Schnecke betrug 270 U/min, der Durchsatz 10 000 g/min.

Am Ende der Schnecke wurde die heiße Schmelze als Strang abgezogen, im Wasserbad gekühlt und granuliert.

Die Ergebnisse der jeweiligen Produktprüfung sind in der Tabelle angegeben.

**Beispiel 2** (Rohrmischer-ZSK-Verfahren):

Die obige Polyester-Butandiol-Mischung mit dem Zinndioctoat wurde kontinuierlich in das untere Ende eines Rohrmischer dosiert. Gleichzeitig pumpte man kontinuierlich das 4,4-Diphenylmethandiisocyanat (130°C) in die benachbarte Einspeisestelle am unteren Ende des Rohrmischers. Der Durchsatz betrug 9 000 g/min. Der mit 240°C beheizte Rohrmischer hatte einen Durchmesser von 7 cm und ein Länge/Durchmesser-Verhältnis von 7:1. Der mit Stäben besetzte Rührer des Rohrmischers wurde mit 1 800 U/min gedreht. Das entstandene TPU wurde am oberen Ende des Rohrmischers ausgetragen und direkt in die erste Einspeisestelle (Gehäuse 1) einer ZSK 83 dosiert. In das gleiche Gehäuse dosierte man das Ethylen-bis-stearylamid. Die Einstellung der ZSK-Parameter war analog Beispiel 1. Die quasi-adiabatische Gehäuse-Temperatur-Einstellung zeigte, daß in der ZSK keine Reaktionswärme mehr frei wurde.

Am Ende der Schnecke wurde die heiße Schmelze als Strang abgezogen, im Wasserbad gekühlt und granuliert.

<u>**Beispiele 3-5**</u> (extruderfreies Rohrmischer-Verfahren):

Dieses Verfahren wurde analog Beispiel 2 durchgeführt. Man verwendete einen unbeheizten Rohrmischer mit einem Durchmesser von 4,2 cm und einem Länge/Durchmesser-Verhältnis von 2,7. Der Durchsatz betrug 520 g/min., die Drehzahl des Rührers 500, 1 000 bzw. 3 000 U/min.
Die Polyester-Butandiol-Mischung wurde auf 170°C erhitzt und das 4,4'-Diphenylmethan-diisocyanat auf 80°C.
Der Umsatz am Ende des Rohrmischer betrug 99 Äquivalent-%, bezogen auf das 4,4-Diphenylmethandiisocyanat.
Das TPU wurde kontinuierlich auf einen beschichteten Metall-Träger dosiert, 30 Min. bei 110°C nachgetempert und granuliert.

**Blasfolienherstellung aus den TPUs der Beispiele 1-5**

Das jeweilige TPU-Granulat wurde in einem Einwellen-Extruder 30/25D Plasticorder PL 2000-6 der Firma Brabender aufgeschmolzen (Dosierung 3 kg/h; 185-205°C) und durch einen Folienblaskopf zu einer Schlauchfolie extrudiert.

**Herstellung der Spritzgießkörper aus den TPUs der Beispiele 1-5**

Das jeweilige TPU-Granulat wurde in einer Spritzgießmaschine D 60 (32er Schnecke) der Firma Mannesmann aufgeschmolzen (Massetemperatur ca. 225°C) und zu Platten geformt (125 mm x 50 mm x 2mm).

**Dynamisch-mechanische Analyse (DMA) über die Temperatur**

Von den Produkten wurde jeweils eine dynamisch-mechanische Messung eines aus der Spritzgießplatte gestanzten Prüfkörpers (5 0 mm x12 mm x 2 mm) im Torsionsschwingversuch über die Temperatur analog DIN 53445 durchgeführt.
Die Messungen wurden mit dem RDA 700 der Firma Rheometrics mit 1 Hz im Temperaturbereich von -125°C bis 200°C mit einer Heizrate von 1°C/min durchgeführt.
Zur Charakterisierung des erfindungsgemäßen Erweichungsverhaltens ist in der folgenden Tabelle die Temperatur angegeben, bei der der Speichermodul G' den Wert 1 MPa erreicht (die Erweichungstemperatur).

**Mechanische Prüfung bei Raumtemperatur**

Der Modul bei 100 % Dehnung wurde an den Spritzgießprüfkörpern nach DIN 53405 gemessen.

**Ergebnisse :**

| Beispiel | Reaktor | Verweilzeit (sec) | Rührer-Drehzahl (U/min) | Umfangsgeschwindigkeit/ Durchsatz (m/g) | 100 %-Modul (MPa) | Erweichungstemperatur DMA (°C) |
|---|---|---|---|---|---|---|
| 1* | ZSK | 30 | 270 | 0,01 | 10,3 | 152 |
| 2 | Rohrmischer | 10 | 1800 | 0,04 | 9,9 | 149 |
| 3 | Rohrmischer | 15 | 500 | 0,13 | 10,1 | 135 |
| 4 | Rohrmischer | 15 | 1000 | 0,25 | 9,8 | 136 |
| 5 | Rohrmischer | 15 | 3000 | 0,76 | 10,3 | 129 |

* nicht erfindungsgemäßes Vergleichsbeispiel

EP 1 055 692 B1

Von allen Produkten erhielt man homogene Blasfolien.

Die nach dem erfindungsgemäßen Rohrmischer-Verfahren hergestellten Produkte weisen im Vergleich zu dem nach dem normalen ZSK-Verfahren hergestellten Produkt bei gleichen mechanischen Eigenschaften bei Raumtemperatur und gleich guter Folien-Homogenität eine deutlich herabgesetzte Erweichungstemperatur auf.

Dieses Aufschmelzverhalten ist vorteilhaft insbesondere für den TPU-Schmelzfolienund Sinterbereich.

**Patentansprüche**

1. Verfahren zur kontinuierlichen Herstellung thermoplastisch verarbeitbarer, homogener Polyurethanelastomere mit verbessertem Erweichungsverhalten, bei dem
ein oder mehrere Diisocyanate (A) und
eine zerewitinoffaktive Wasserstoffatome aufweisende Mischung (B) aus

    B1) 1 bis 85 Äquivalent-%, bezogen auf die Isocyanatgruppen in (A), einer oder mehrerer Verbindungen mit im Mittel mindestens 1,8 und höchstens 2,2 zerewitinoffaktiven Wasserstoffatomen pro Molekül und einem mittleren Molekulargewicht $\overline{M}_n$ von 450 g/Mol bis 5 000 g/Mol,

    B2) 15 bis 99 Äquivalent-%, bezogen auf die Isocyanatgruppen in (A), einer oder mehrerer Kettenverlängerungsmittel mit im Mittel mindestens 1,8 und höchstens 2,2 zerewitinoffaktiven Wasserstoffatomen pro Molekül und einem Molekulargewicht von 60 g/Mol bis 400 g/Mol, sowie

    0 bis 20 Gew.-%, bezogen auf die Gesamtmenge an TPU, weiterer Hilfs- und Zusatzstoffe (C),
    wobei die Komponenten (A) und (B) in einem NCO:OH-Verhältnis von 0,9:1 bis 1,1:1 eingesetzt werden,
    in einem nicht zwangsfördernd gerührten Rohrreaktor im wesentlichen zum vollständigen Umsatz gebracht werden, **dadurch gekennzeichnet, daß** das Verhältnis aus Umfangsgeschwindigkeit des Rührers (in m/sec) im Rohrreaktor und Durchsatz (in g/sec) den Wert von 0,03 (m/g) überschreitet.

2. Verfahren gemäß Anspruch 1, **dadurch gekennzeichnet, daß** die zerewitinoffaktive Wasserstoffatome enthaltene Verbindung B1) ein Polyesterdiol, Polyetherdiol, Polycarbonatdiol oder ein Gemisch daraus ist.

3. Verfahren gemäß Anspruch 1, **dadurch gekennzeichnet, daß** die zerewitinoffaktive Wasserstoffatome enthaltene Verbindung B2) Ethylenglykol, Butandiol, Hexandiol, 1,4-Di-(β-hydroxyethyl)-hydrochinon, 1,4-Di-(β-hydroxyethyl) bisphenol A oder ein Gemisch daraus ist.

4. Verfahren gemäß Anspruch 1, **dadurch gekennzeichnet, daß** das Diisocyanat A) 1,6-Hexamethylendiisocyanat, Isophorondiisocyanat, Dicyclohexylmethandiisocyanat oder Diphenylmethandiisocyanat-Isomerengemisch mit einem 4,4'-Diphenylmethandiisocyanatgehalt von größer als 96 Gew.-% ist.

5. Verfahren gemäß einem oder mehreren der Ansprüche 1 bis 4, **dadurch gekennzeichnet, daß** die im Rohrreaktor hergestellte Reaktionsmischung in einen Extruder dosiert wird und dort gegebenenfalls Hilfsstoffe und/oder weitere Komponenten eingemischt werden.

6. Verfahren gemäß einem oder mehreren der Ansprüche 1 bis 5, **dadurch gekennzeichnet, daß** die TPU bildenden Komponenten A), B1 ), B2) in einem gerührten Rohrreaktor innerhalb von 60 Sekunden zu einem Umsatz >90 %, bezogen auf die Einsatzkomponente A), gebracht werden.

7. Verwendung der nach dem Verfahren gemäß den Ansprüchen 1 bis 6 hergestellten Polyurethane zur Herstellung von Spritzgießartikeln und Extrusionsartikeln.

**Claims**

1. Process for the continuous preparation of thermoplastically processable homogeneous polyurethanes with improved softening properties, in which
one or more polyisocyanates (A) and
a mixture (B), containing Zerewitinoff-active hydrogen atoms, of

B1) 1 to 85 equivalent%, based on the isocyanate groups in (A), of one or more compounds having on average at least 1.8, and at most 2.2 Zerewitinoff-active hydrogen atoms per molecule and with an average molecular weight $\overline{M}_n$ of 450 g/mol to 5,000 g/mol,

B2) 15 to 99 equivalent%, based on the isocyanate groups in (A), of one or more chain-lengthening agents having on average at least 1.8, and at most 2.2 Zerewitinoff-active hydrogen atoms per molecule and with a molecular weight of 60 g/mol to 400 g/mol, and

0 to 20 wt.%, based on the total amount of TPU, of further auxiliary substances and additives (C),
components (A) and (B) being employed in an NCO:OH ratio of 0.9:1 to 1.1:1,
are substantially reacted to completion in a tubular reactor stirred without positively controlled conveyance, **characterized in that** the ratio of the circumferential speed of the stirrer (m/sec) in the tubular reactor and the throughput (g/sec) exceeds the value of 0.03 (m/g).

2.  Process according to claim 1, **characterized in that** the compound B1) containing Zerewitinoff-active hydrogen atoms is a polyester diol, polyether diol, polycarbonate diol or a mixture thereof.

3.  Process according to claim 1, **characterized in that** the compound B2) containing Zerewitinoff-active hydrogen atoms is ethylene glycol, butanediol, hexanediol, 1,4-di-(β-hydroxyethyl)-hydroquinone, 1,4-di-(β-hydroxyethyl)bisphenol A or a mixture thereof.

4.  Process according to claim 1, **characterized in that** the diisocyanate A) is 1,6-hexamethylene-diisocyanate, isophorone-diisocyanate, dicyclohexylmethanediisocyanate or a diphenylmethane-diisocyanate isomer mixture with a 4,4'-diphenylmethane-diisocyanate content of greater than 96 wt.%.

5.  Process according to one or more of claims 1 to 4, **characterized in that** the reaction mixture prepared in the tubular reactor is metered into an extruder, and auxiliary substances and/or further components are optionally mixed in there.

6.  Process according to one or more of claims 1 to 5, **characterized in that** the TPU-forming components A), B1) and B2) are brought to a conversion of >90%, based on the starting component A), in a stirred tubular reactor in the course of 60 seconds.

7.  Use of the polyurethanes prepared by the process according to claims 1 to 6 for the production of injection-moulded articles and extruded articles.

**Revendications**

1.  Procédé pour la préparation continue d'élastomères de polyuréthanes homogènes transformables de manière thermoplastique avec un comportement amélioré au ramollissement dans lequel
    un ou plusieurs diisocyanates A) et
    un mélange B) présentant des atomes d'hydrogène Zerewitinoff- actifs constitués

    B1) de 1 à 85 % équivalents, rapportés aux groupes isocyanates dans (A), d'un ou plusieurs composés avec en moyenne au moins 1,8 et au plus 2,2 atomes d'hydrogène Zerewitinoff- actifs par molécule et un poids moléculaire moyen $\overline{M}_n$ de 450 g/mol à 5000 g/mol,
    B2) de 15 à 99 % équivalents, rapportés aux groupes isocyanates dans (A), d'un ou plusieurs agents d'allongement de chaîne avec en moyenne au moins 1,8 et au plus 2,2 atomes d'hydrogène Zerewitinoff- actifs par molécule et un poids moléculaire de 60 g/mol à 400 g/mol, ainsi que

    de 0 à 20 % en poids, rapportés à la quantité totale de TPU, d'autres auxiliaires et additifs (C),
    les constituants (A) et (B) étant utilisés dans un rapport NCO:OH de 0,9:1 à 1,1:1,
    sont amenés à réagir en principe jusqu'à conversion complète dans un réacteur installé en ligne agité sans contrainte, **caractérisé en ce que** le rapport de la vitesse de rotation de l'agitateur (en m/s) dans le réacteur installé en ligne au débit (en g/s) dépasse la valeur de 0,03 (m/g).

2.  Procédé selon la revendication 1, **caractérisé en ce que** le composé contenant des atomes d'hydrogène Zerewitinoff- actifs B1) est un polyesterdiol, un polyétherdiol, un polycarbonatediol ou un mélange de ceux-ci.

3.  Procédé selon la revendication 1, **caractérisé en ce que** le composé contenant des atomes d'hydrogène Zerewitinoff- actifs B2) est l'éthylèneglycol, le butanediol, l'hexanediol, la 1,4-di-(β-hydroxyéthyl)-hydroquinone, le 1,4-di-(β-hydroxyéthyl)bisphénol A ou un mélange de ceux-ci.

4.  Procédé selon la revendication 1, **caractérisé en ce que** le diisocyanate A) est le diisocyanate de 1,6-hexaméthylène, le diisocyanate d'isophorone, le diisocyanate de dicyclohexylméthane ou un mélange d'isomères de diisocyanate de diphénylméthane avec une teneur en diisocyanate de 4,4'-diphénylméthane supérieure à 96 % en poids.

5.  Procédé selon l'une ou plusieurs quelconques des revendications 1 à 4, **caractérisé en ce que** le mélange réactionnel préparé dans le réacteur installé en ligne est dosé dans une extrudeuse et des auxiliaires et/ou d'autres constituants y sont éventuellement mélangés.

6.  Procédé selon l'une ou plusieurs quelconques des revendications 1 à 5, **caractérisé en ce que** les constituants A), B1), B2) formant des TPU sont amenés à réagir dans un réacteur installé en ligne agité en l'espace de 60 secondes jusqu'à une conversion > 90 % rapportée au constituant A) utilisé.

7.  Utilisation des polyuréthanes préparés selon le procédé selon les revendications 1 à 6 pour la préparation d'articles coulés par injection et d'articles d'extrusion.